Europäisches Patentamt

(19) European Patent Office

Office européen des brevets

(11) Numéro de publication : **0 095 960**
B1

(12) **FASCICULE DE BREVET EUROPÉEN**

(45) Date de publication du fascicule du brevet :
18.09.85

(51) Int. Cl.⁴ : **G 03 H   1/00**, G 02 F   1/05

(21) Numéro de dépôt : **83400987.0**

(22) Date de dépôt : **17.05.83**

(54) Dispositif de mise en mémoire d'une image cohérente dans une cavité optique multimode.

(30) Priorité : 28.05.82 FR 8209448

(43) Date de publication de la demande :
07.12.83 Bulletin 83/49

(45) Mention de la délivrance du brevet :
18.09.85 Bulletin 85/38

(84) Etats contractants désignés :
**CH DE GB IT LI NL SE**

(56) Documents cités :
EP-A- 0 061 360
US-A- 3 466 110
US-A- 3 632 182
OPTICS LETTERS, vol. 6, no. 12, decembre 1981,
pages 622-624, Optical Society of America, New York,
USA J.P. HUIGNARD et al.: "Two-wave mixing and
energy transfer in Bi12SiO20 crystals : application to
image amplification and vibration analysis"
OPTICS COMMUNICATIONS, vol. 38, no. 4, 15 août
1981, pages 249-254, North-Holland Publishing
Company, Amsterdam, NL. J.P. HUIGNARD et al.:
"Coherent signal beam amplification in two-wave
mixing experiments with photorefractive Bi12SiO20
crystals"

(73) Titulaire : **THOMSON-CSF**
**173, Boulevard Haussmann**
**F-75379 Paris Cedex 08 (FR)**

(72) Inventeur : **Huignard, Jean-Pierre**
**THOMSON-CSF SCPI 173, bld Haussmann**
**F-75379 Paris Cedex 08 (FR)**
Inventeur : **Rak, Daniel**
**THOMSON-CSF SCPI 173, bld Haussmann**
**F-75379 Paris Cedex 08 (FR)**
Inventeur : **Herriau, Jean-Pierre**
**THOMSON-CSF SCPI 173, bld Haussmann**
**F-75379 Paris Cedex 08 (FR)**
Inventeur : **Ledoux, Isabelle**
**THOMSON-CSF SCPI 173, bld Haussmann**
**F-75379 Paris Cedex 08 (FR)**

Imprimerie Jouve, 18, rue St-Denis, 75001 Paris, France

IBM TECHNICAL DISCLOSURE BULLETIN, vol. 23, no. 2, juillet 1980, pages 831-832, New York, USA G.T. SINGERBOX et al. : " System to increase the efficiency of the holographic energy distribution for individual chip replacement "

OPTICAL ENGINEERING, vol. 21, no. 2, mars-avril 1982, pages 224-230, Bellingham, Washington, USA J.O. WHITE et al. : " Spatial information processing and distortion correction via four-wave mixing "

APPLIED PHYSICS, vol. 8, 1975, pages 51-58, Springer-Verlag, Heidelberg, DE. D.P. JABLONOWSKI et al. : " A coherent optical feedback system for optical information processing "

## Description

L'invention se rapporte à un dispositif de mise en mémoire d'une image cohérente dans une cavité optique multimode.

La mise en mémoire d'une information optique prend des formes variées et touche de nombreux domaines d'application : ce peut être l'enregistrement d'objets bidimensionnels ou tridimensionnels à des fins de sauvegarde. La photographie est la forme première et encore essentielle du stockage optique, mais les lasers ont suscité le développement de nouveaux procédés applicables notamment aux domaines de l'audiovisuel et de l'informatique. Cependant, si les recherches sont nombreuses, les débouchés actuels sont limités : deux applications paraissent bien représenter les possibilités offertes par le stockage optique : le stockage holographique et le stockage d'images de télévision sur « vidéodisque ».

Le domaine de l'invention est celui du stockage et du traitement ultérieur, rendu alors possible, d'images cohérentes. Mais contrairement aux deux applications précédemment nommées, ce domaine est celui de l'enregistrement dynamique d'images cohérentes.

Une autre possibilité de sauvegarde est envisagée dans la demande de brevet déposée le 27 février 1981 sous le numéro FR-A-2 500 937 qui décrit un dispositif permettant de faire circuler dans un guide optique une impulsion d'énergie radiante issue d'une source cohérente tout en compensant à chaque révolution les pertes introduites lors de la propagation. On régénère ainsi l'impulsion à un niveau constant. On peut également selon le dispositif envisager une amplification d'une impulsion d'énergie radiante incidente en transférant l'énergie d'un faisceau de pompage vers le signal. Le dispositif proposé assure ainsi la circulation d'une impulsion d'énergie radiante dans une fibre en maintenant le niveau du signal quel que soit le nombre de tours parcourus. Mais dans ce cas il ne s'agit que d'une impulsion dont l'amplitude est conservée tout en se propageant dans un guide d'onde monomode. Ce dispositif, en effet, ne permet pas la conservation d'un front d'onde de forme quelconque. Ce que se propose de réaliser le dispositif de l'invention. En effet, le dispositif de l'invention comporte une cavité optique multimode, dans laquelle une oscillation stable de l'image cohérente est entretenue.

La présente invention a pour objet un dispositif de mise en mémoire d'une image cohérente dans une cavité optique multimode, comprenant au moins une source cohérente qui génère au moins une première onde signal et au moins une deuxième onde référence, des moyens de guidage optique permettant de former une boucle fermée dans laquelle circule chaque onde signal, un milieu interactif amplificateur étant disposé sur le parcours de chaque onde signal et sur celui de chaque onde référence, chaque onde signal interférant avec une onde référence dans ce milieu pour créer un réseau de diffraction, chaque onde signal recevant de l'énergie de cette onde référence, caractérisé en ce que ces moyens de guidage forment une cavité optique multimode, ce milieu interactif amplificateur étant disposé dans le plan de Fourier de cette activité, une lame semi-transparente étant disposée sur le parcours de chaque onde signal pour extraire une partie de l'énergie de la cavité optique multimode.

D'autres caractéristiques et avantages de l'invention apparaîtront dans la description ci-après, en référence aux figures annexées où :

les figures 1 à 3 illustrent le fonctionnement d'un milieu amplificateur de l'art connu ;

la figure 4 est une figure explicative du fonctionnement d'un dispositif de l'art connu ;

les figures 5 et 6 représentent le dispositif de l'invention ;

la figure 7 représente une variante du dispositif de l'invention.

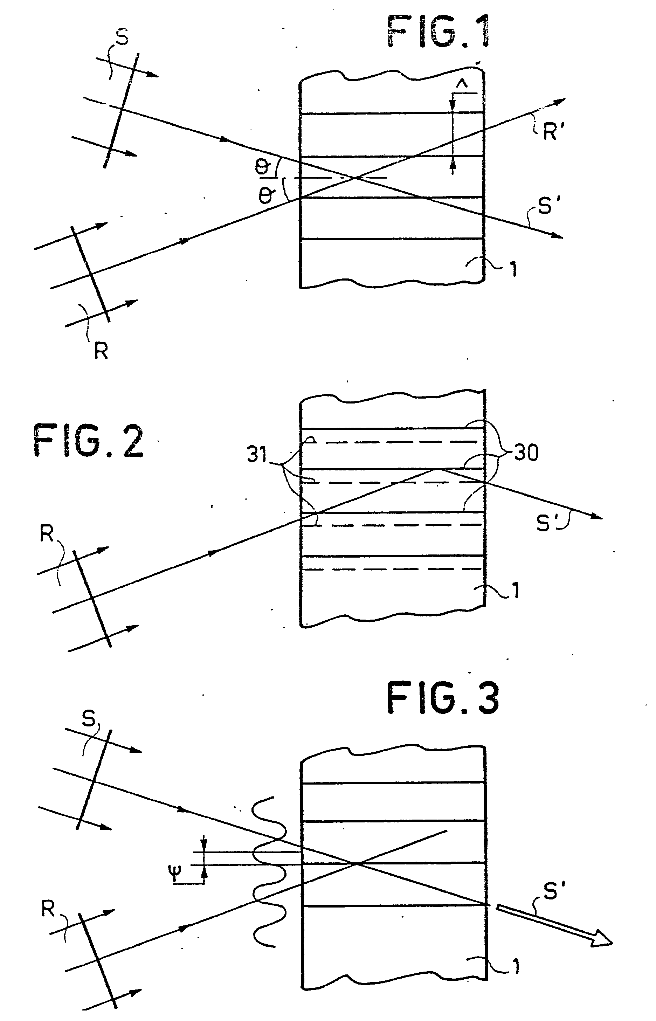

Avant de décrire le dispositif de l'invention qui permet la mise en mémoire d'une image cohérente à l'intérieur d'une cavité multimode en utilisant un milieu amplificateur, dans lequel interagissent deux ondes : l'onde objet et une onde de pompe, ce phénomène d'interaction du type deux ondes va tout d'abord être décrit en illustration des figures 1 à 3.

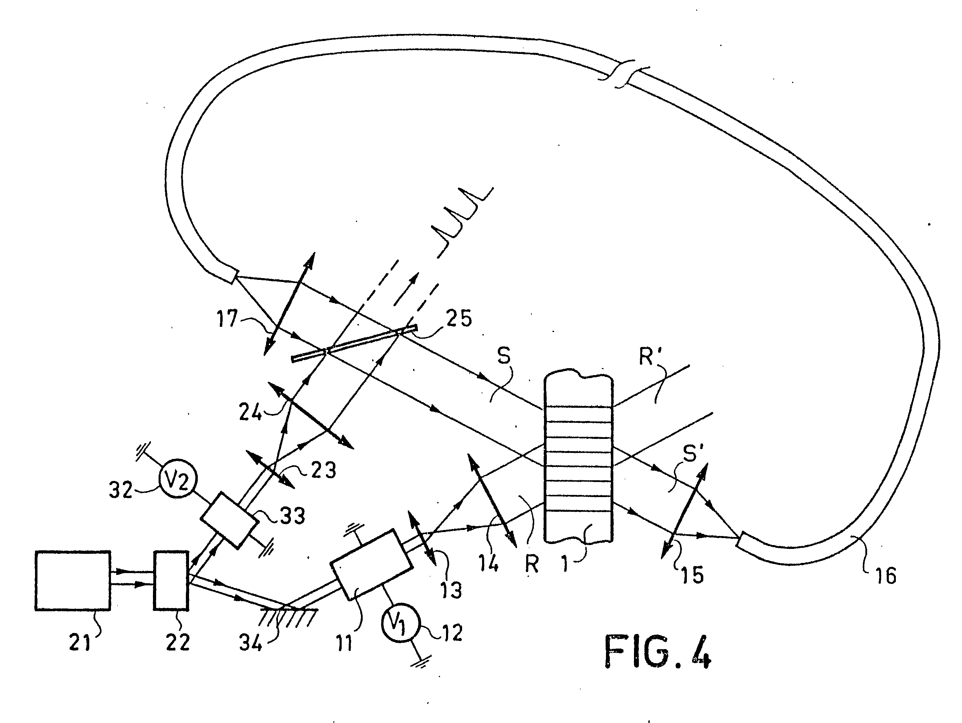

La figure 4, quant à elle, illustre un dispositif de l'art connu qui utilise une amplification de ce type : ce dispositif permettant l'amplification d'une onde d'énergie radiante incidente en transférant l'énergie d'un faisceau de pompage vers le signal. Il assure ainsi la circulation d'une impulsion d'énergie radiante dans une fibre en maintenant le niveau du signal quel que soit le nombre de tours parcourus.

Ainsi le dispositif de l'invention utilise les phénomènes de couplage d'onde à la lecture de réseaux de phase. On considère donc un réseau de phase à efficacité de diffraction élevée enregistré de façon permanente sur un support photosensible constitué de structures de phases diffractantes épaisses, photoinduites par variation d'indice dans les cristaux électro-optiques, photo-polymères ou matériaux argentiques blanchis.

En effet, on dispose actuellement de matériaux permettant l'inscription des réseaux ou hologrammes de phase à efficacité de diffraction élevée qui permettent une mémorisation de l'information de façon permanente. Ces matériaux sont « épais » par rapport au pas moyen des strates photoinduites, et leur comportement à l'inscription et à la lecture est décrit par le formalisme des ondes couplées, régi par la relation de Bragg.

Dans le cas simple de l'interférence de deux ondes planes, arrivant sur le support photosensible avec les incidences $+\theta$ et $-\theta$, l'espacement des plans de diffraction dans le support est lié à l'angle $\theta$ et à la longueur d'onde par la relation de Bragg $2\,\Lambda \sin\theta = \lambda$. Inversement, un réseau donné de pas $\Lambda$ diffractera

de façon significative un faisceau de lecture de longueur d'onde λ, s'il arrive sur le milieu avec l'angle θ, lié à λ et Λ par cette relation de Bragg. Un réseau donné, constitué de plans de diffraction parallèles d'espacement Λ peut être relu par un faisceau de longueur d'onde λ', il suffit que son angle d'incidence θ' soit ajusté de façon que la loi de Bragg 2Λ sin θ' = λ', soit vérifiée.

Si, comme sur la figure 1, ce réseau est éclairé par deux ondes planes cohérentes R et S issues du même laser et de même intensité on a la relation $\Lambda = \lambda/(2 \sin \theta)$.

Le pas Λ résultant de l'interférence de R et S est rigoureusement identique à celui du réseau de phase, et ce sont, par exemple, ces mêmes faisceaux R et S qui ont servi à la fabrication du réseau de strates qui a été inscrit préalablement.

Ainsi dans l'épaisseur du milieu considéré, l'onde objet S a interféré avec une onde de référence R de front d'onde plan. Un réseau de franges d'interférence ainsi créé a généré dans le cristal, un réseau de strates d'indice. Ce réseau de strates diffracte une partie de l'énergie de l'onde de référence R en une onde diffractée S' dont le front d'onde est isomorphe du front d'onde objet.

Ainsi selon le formalisme des ondes couplées, il y a, après traversée du cristal, une redistribution de l'énergie entre les deux faisceaux. Cette nouvelle répartition d'énergie est fonction du déphasage relatif ψ entre les deux ondes. Soient :

$I_R$, $I_S$ L'intensité des deux ondes qui interfèrent ;

$I_R'$, $I_S'$ L'intensité des deux ondes à la sortie du cristal ;

ψ Le déphasage de l'intensité lumineuse par rapport au réseau de phase photoinduit ;

η L'efficacité de diffraction de la structure.

Les intensités $I_S'$ et $I_R'$ s'obtiennent respectivement par les relations suivantes :

$$I_R' = I_R(1 - \eta) + \eta I_S - 2\sqrt{I_R(1 - \eta) I_S \eta} \sin \Psi$$

$$I_S' = I_R(1 - \eta) + \eta I_S + 2\sqrt{I_R(1 - \eta) I_S \eta} \sin \Psi$$

Dans le cas particulier de la figure $I_R = I_S = I_0$, soit :

$$I_R' = I_0[1 - 2 \times \sqrt{\eta(1 - \eta)} \sin \Psi]$$

$$I_S' = I_0[1 + 2 \times \sqrt{\eta(1 - \eta)} \sin \Psi]$$

Le transfert d'énergie est donc optimum lorsque l'on satisfait simultanément aux conditions suivantes :

$$\eta = 50\% \qquad \psi = \pi/2$$

Dans ce cas, on obtient après traversée du réseau de phase :

$$I_R' = 0 \; ; \; I_S' = 2I_0$$

L'interprétation physique des phénomènes est la suivante : l'onde R incidente est diffractée par le réseau de phase tri-dimensionnel. L'onde S' ainsi générée est, par exemple, en retard de phase de π/2 par rapport à l'onde de lecture R. Dans un milieu 1 dans lequel interfèrent deux ondes il y a, en effet, déphasage de π/2 entre le réseau d'interférence 31 des deux faisceaux et le réseau de phase 30, comme cela est représenté à la figure 2.

Par contre l'onde R', qui est générée par diffraction de l'onde S, serait en avance de phase de π/2 par rapport à cette même onde S.

Du fait de l'introduction d'un déphasage ψ = π/2 entre les deux ondes R et S qui arrivent sur le milieu 1, il y a donc mise en phase cohérente de l'onde S' générée et de l'onde incidente S. En effet pour l'onde S', comme représenté à la figure 3, le déphasage résultant par rapport à l'onde S est de : − π/2 + π/2 ; donc ce déphasage est nul. Par contre pour l'onde R' le déphasage résultant par rapport à l'onde R est π/2 + π/2 = π. Par conséquent il y a interférence destructive dans la direction du faisceau R et donc diminution de l'énergie directement transmise selon R'.

Les conditions optimales pour le transfert d'énergie sont satisfaites avec les conditions expérimentales suivantes :

$$\eta = 50\% \; ; \; I_R = I_S = I_0 \; ; \; \psi = \pi/2$$

et donc le gain de $I_S'/I_S$ vaut 3 dB.

Ces conditions sont remplies avec un milieu 1 réalisé par exemple en gélatine.

Un dispositif de l'art connu basé sur les phénomènes de couplage d'ondes précédemment décrits est représenté à la figure 4.

Ainsi dans le cas considéré le réseau d'intensité lumineuse de l'interférence des deux faisceaux R et

## 0 095 960

S est déphasé de π/2 par rapport au réseau de phase ce qui a comme conséquence d'obtenir une onde diffractée de l'onde R sur le réseau de phase superposée à l'onde S transmise : tout se passe comme si l'onde transmise S' étant enrichie d'une fraction de l'énergie de l'onde référence.

Le faisceau S' issu du réseau est couplé au milieu de propagation qui peut être par exemple un guide d'onde ou une fibre monomode par l'intermédiaire de composants optiques classiques. Dans le cas considéré à la figure 4, le milieu 1 est couplé à la fibre 16 par l'intermédiaire des lentilles convergentes 15 et 17.

Sur cette figure 4 les deux faisceaux S et R sont issus d'un même laser 21 après traversée d'un séparateur de faisceaux 22.

Le faisceau R traverse un modulateur de phase 11 puis un élargisseur de faisceau composé de deux lentilles 13 et 14, après avoir été préalablement réfléchi par un miroir 34. Le faisceau S consiste en une impulsion d'énergie radiante qui est entrée initialement grâce à un modulateur d'amplitude 33 piloté par un générateur 32. Cette impulsion après traversée d'un élargisseur de faisceau (23, 24) est entrée dans la boucle par l'intermédiaire d'une lame séparatrice 25. Cette même lame séparatrice permet d'ailleurs de sortir l'impulsion qui circule dans la boucle formée par la fibre 16 couplée au milieu 1. On peut d'ailleurs ôter cette lame une fois que le processus est lancé.

Le signal sortant de cette fibre 16 est réinjecté à l'entrée du réseau où il interfère de façon cohérente avec l'onde R issue du laser 21. Le déphasage $\psi = \pi/2$ est ajusté de façon précise à l'aide du modulateur de phase 11 électro-optique disposé sur le faisceau R par exemple. Ce modulateur étant attaqué par une tension $V_1$ on ajuste les pertes par absorption optique et par couplage de l'onde signal S à 3 dB. Les pertes dues au couplage extérieur du faisceau S par l'intermédiaire d'une lame séparatrice 25 sont d'environ 1 dB, et les pertes dues au couplage entre la fibre 16 et le milieu 1 et les pertes dans cette fibre 16 sont d'environ 2 dB.

Dans ces conditions le gain obtenu par transfert d'énergie de l'onde de pompage R vers l'onde signal S compense les pertes et le niveau de l'impulsion signal reste le même quel que soit le nombre de passages dans le milieu de propagation. Le bon fonctionnement du système exige la stabilité dans le temps de la condition de phase initiale $\psi = \pi/2$, d'où la nécessité d'une très bonne stabilité du mode de la source laser. Les exigences quant à la longueur de cohérence de la source monomode peuvent être réduites si le temps de transit $\tau$ de l'impulsion dans la fibre est un multiple de 2l/c ; l étant la longueur de la cavité laser. En effet 2l/c est l'intervalle de temps entre deux maxima de cohérence pour une cavité laser. Il y a alors une bonne cohérence du fonctionnement de la boucle formé par la spire 16 et le milieu 1 par rapport au fonctionnement de la cavité laser.

Le dispositif de l'art connu assure donc la circulation d'une impulsion optique unique dans une fibre, ou guide monomode en maintenant constant le niveau du signal quel que soit le nombre de tours parcourus.

Contrairement à ce dispositif de l'art connu, dans le dispositif de l'invention qui utilise un milieu amplificateur du type décrit aux figures 1 à 3, l'onde objet n'est plus une simple impulsion mais elle peut avoir un front d'onde quelconque.

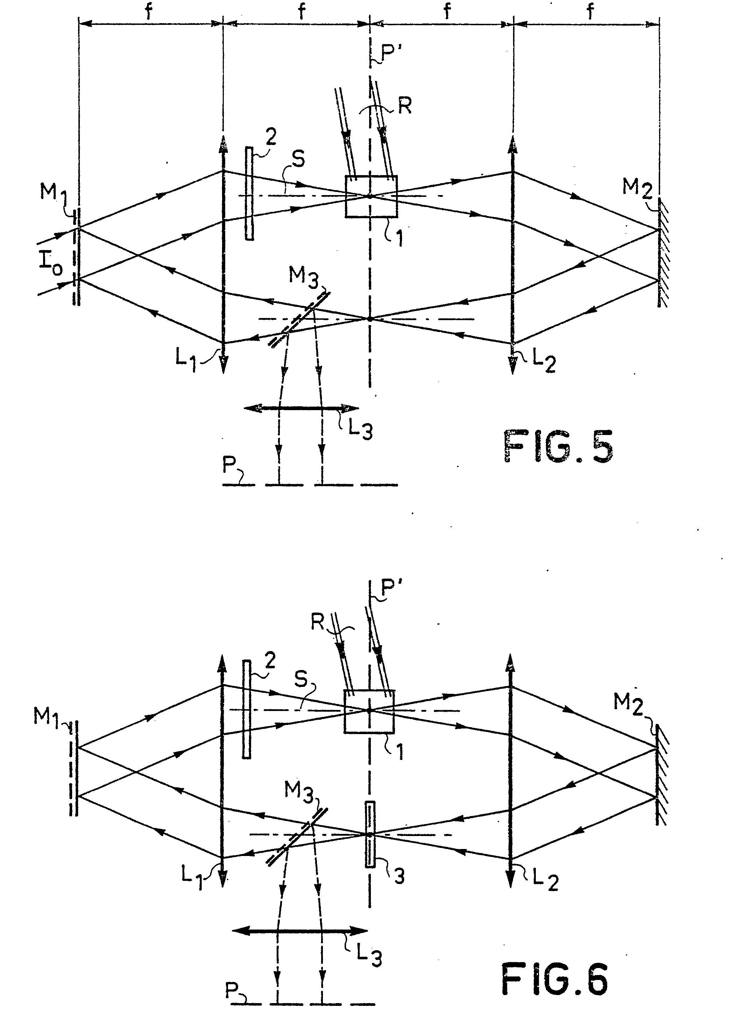

Ainsi l'invention illustrée en regard des figures 5 et 6 se rapporte à un dispositif d'amplification et d'oscillation d'une image optique cohérente. Le milieu amplificateur est constitué d'un matériau photoréfractif fonctionnant par variation d'indice photoinduite. L'adjonction d'une boucle de contre réaction constituée de miroirs et lentilles permet de réaliser une cavité optique multimode et d'entretenir une oscillation stable de l'image dans la cavité.

On réalise, dans le milieu amplificateur 1, l'interférence cohérente d'une onde signal S incidente avec une onde de référence R placée hors d'axe et beaucoup plus intense. Dans ces conditions on inscrit dans tout le volume de ce milieu 1, une structure de phase diffractante dont la constante de temps d'établissement dépend à la fois de la puissance disponible sur l'onde de référence et des mécanismes physiques mis en jeu dans ce milieu 1. Par un mécanisme d'auto-diffraction de l'onde de référence R dans le réseau de phase qu'elle vient d'inscrire on peut obtenir un renforcement de l'amplitude de l'onde signal S incidente donc une amplification après traversée du milieu 1. Ce phénomène de couplage d'ondes a pour origine la réponse non locale du milieu sous l'action de l'illumination des franges d'interférences. Ce décalage spatial entre la variation d'indice photoinduite et l'illumination peut ête induit :

— soit par déplacement des strates à vitesse constante ;

— soit par changement d'indice sous l'action du gradient de l'illumination (mécanisme de diffusion des photoporteurs).

Le premier type de fonctionnement peut être envisagé avec des matériaux du type oxyde de Bismuth silicium, oxyde de Bismuth Germanium, et le second type de fontionnement avec des matériaux du type Niobate de Potassium, ou Titanate de Baryum.

L'intensité transmise se met alors sous la forme :

$I_T = I_S \exp [\Gamma - \alpha] \times 1$

$\Gamma$ = coefficient exponentiel de gain

$\alpha$ = coefficient d'absorption

l = longueur d'interaction.

5

Le dispositif de l'invention permet d'utiliser cet amplificateur paramétrique optique où tous les faisceaux sont à la même fréquence pour réaliser un oscillateur multimode compatible avec un signal image.

De même qu'un oscillateur électrique est essentiellement constitué d'un amplificateur et d'un circuit résonnant, l'oscillateur lumineux comporte un milieu amplificateur de la lumière, et un ensemble de miroirs constituant ce que l'on appelle le « résonateur » ou, par analogie avec les oscillateurs hyperfréquence, la « cavité » du laser. Une onde d'oscillation se propage donc à l'intérieur de cette cavité.

Dans le dispositif de l'invention représenté à la figure 5, il y a donc une cavité laser se composant des éléments suivants : deux miroirs $M_1$ et $M_2$ entre lesquels circule l'onde objet, et un milieu amplificateur 1 situé sur le trajet de cette onde objet. Deux lentilles $L_1$ et $L_2$ permettent de définir le trajet de cette onde objet dans la cavité. Le miroir $M_1$ est partiellement réfléchissant, par exemple semi-transparent, et permet l'introduction de l'onde objet dans la cavité, comme représenté à la figure 5 ; le signal d'entrée pouvant alors être supprimé comme illustré par la figure 6.

Le schéma de la cavité optique, utilisée et basée sur les propriétés de transformée de Fourier des lentilles, est indiqué sur la figure 5. En effet le plan P' est le plan focal commun aux deux lentilles $L_1$ et $L_2$, c'est le plan de Fourier de la cavité. Le signal d'entrée est constitué par une diapositive ou tout autre transducteur électro-optique servant à la composition de l'image en temps réel. Ce peut être aussi tout objet tridimensionnel éclairé par un faisceau de lumière cohérente dont l'image est ramenée dans un plan.

Le milieu amplificateur 1 est placé au voisinage du plan de Fourier de la lentille $L_1$, ce qui permet un traitement du spectre de l'image. La lentille $L_2$ et le miroir $M_2$ permettent à l'onde issue du milieu amplificateur 1 de retourner vers le milieu photoréfractif après réflexion sur le miroir $M_1$, semi-transparent par exemple dont les coefficients de réflexion R et de transmission T sont alors tels que : R = T = 50 %. Le miroir $M_1$ assure à la fois l'introduction du signal de l'image incidente et la réflexion de l'onde amplifiée tournant dans la cavité. Une autre lame semi-transparente $M_3$ permet d'extraire une fraction de l'énergie contenue dans la cavité, la lentille $L_3$ permet la projection de l'image dans un plan P.

La condition d'oscillation de cette cavité est assurée si le gain du milieu amplificateur est supérieur aux pertes de la cavité dues notamment aux miroirs $M_1$, $M_2$ et aux réflexions sur les composants optiques.

Le nombre N de points de l'image susceptibles d'être traités en parallèle dans cette cavité multimode est directement fonction de la dimension du cristal amplificateur qui entraîne une limitation du spectre des fréquences spatiales.

Si on considère le diamètre e d'une tache de diffraction on a :

$$e = \lambda F/D$$

et s sa surface

$$s = \frac{\lambda^2 F^2}{D^2}$$

Si on considère un cristal carré de côté d

$$N = \frac{d^2}{\dfrac{\lambda^2 F^2}{D^2}}$$

Ainsi N

$$N = \frac{D^2 \times d^2}{\lambda^2 \times F^2}$$

D = dimension de l'image incidente
d = dimension du cristal amplificateur
F = focale de la lentille $L_1$.
Avec les valeurs numériques suivantes prises à titre d'exemple non limitatif :
D = 30 mm
d = 3 mm
F = 300 mm
$\lambda = 0,5 \times 10^{-4}$ cm
On obtient : $N = 4 \times 10^5$ points.
Cette valeur correspond au nombre de modes indépendants susceptibles d'osciller dans la cavité.

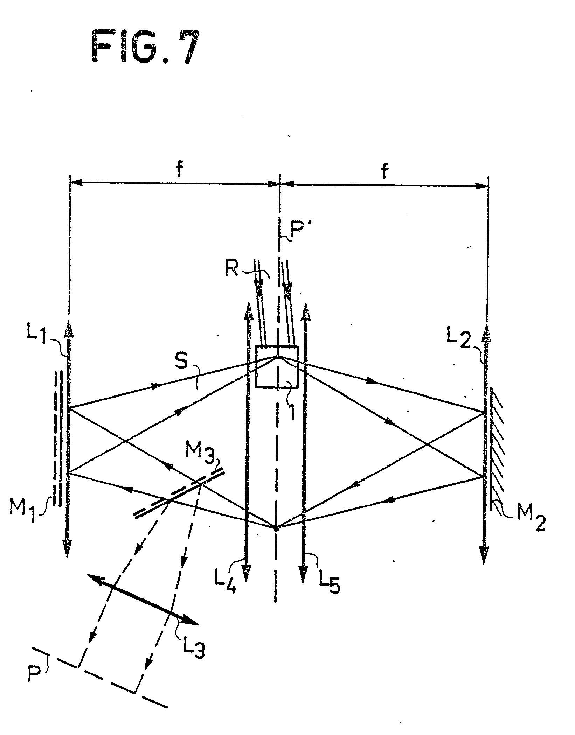

Une variante à la configuration optique de la figure 5 est donnée à titre d'exemple sur la figure 7. Cette structure plus compacte que la précédente assure également la fonction d'une cavité optique multimode.

En effet dans les figures 5 et 6 la distance séparant les miroirs est de quatre fois la distance focale f des lentilles $L_1$ et $L_2$ supposées identiques. Sur cette figure 7 l'introduction des lentilles $L_4$ et $L_5$ permet de considérer une cavité dont la distance entre les deux miroirs est à peu près deux fois cette distance focale, ces miroirs étant supposés collés aux lentilles $L_1$ et $L_2$.

Une oscillation stable peut être maintenue en l'absence du signal image incident initial si les deux conditions suivantes sont remplies.

L'amplification apportée par le milieu est supérieure aux pertes de la cavité :

$$\Gamma > \alpha$$

Le chemin optique $1_{opt}$ vu par tous les modes de la cavité est le même et vaut un multiple de la longueur d'onde ; de façon équivalente le déphasage induit par le parcours de la cavité vaut $2 K \pi$.

$$\Delta\phi = \frac{2\pi}{\lambda} \times l_{opt} = 2 k\pi$$

Le dispositif de l'invention répond au formalisme de Fabry-Perrot, on additionne des ondes qui ont parcouru des trajets de longueur $1_{opt}$, $21_{opt}$, $31_{opt}$... et qui répondent à la condition de phase énoncée plus haut.

Si on suppose que le gain du milieu amplificateur est indépendant du rapport des faisceaux pompe et signal, l'amplitude du champ transmis correspondant à un mode de propagation se met sous la forme :

$$E_t = E_0\, t_1\, r_3 \exp \Gamma \frac{1}{2} \left[ 1 + t_3\, r_1 \exp\left(\frac{\Gamma 1}{2}\right) + t_3^2\, r_1^2 \cdot \exp\left(\frac{2\,\Gamma 1}{2}\right) + t_3^n\, r_1^n \exp\left(\frac{n\,\Gamma 1}{2}\right) + \cdots \right]$$

Cette sommation du type Fabry-Perrot s'écrit :

$$E_t = E_0 \left[ \frac{t_1\, r_3 \exp \Gamma \dfrac{1}{2}}{1 - t_3\, r_1 \exp \Gamma \dfrac{1}{2}} \right]$$

Soit en intensité :

$$I_T = I_0 \times T_1 \times R_3 \frac{\exp \Gamma 1}{\left[ 1 - \sqrt{T_3\, R_1} \exp \Gamma \dfrac{1}{2} \right]^2}$$

La condition d'oscillation, qui s'obtient pour : $I_T \to \infty$, s'écrit :

$$\exp\left(\frac{\Gamma \times 1}{2}\right) \geqslant \frac{1}{\sqrt{T_3\, R_1}}$$

Pour effacer l'information stockée dans la cavité, un obturateur 2 électro-optique, par exemple permet de couper le faisceau signal oscillant dans la cavité. Le cristal photoréfractif est alors éclairé uniformément par l'onde de référence (ou onde de pompe) ce qui relaxe la variation d'indice photoinduite.

Pour utiliser la cavité pour le traitement d'images, un filtre d'amplitude et de phase 3 peut être placé dans le plan de Fourier commun des lentilles $L_1$-$L_2$ afin de modifier le contenu en fréquences spatiales de l'image.

L'introduction dans la cavité d'une fonction de phase $\phi(x, y)$ induit une modulation d'intensité de la forme :

$$I_T = I_0 \times T_1 \times R_3 \frac{\exp \Gamma 1}{\left[ 1 - \sqrt{T_3\, R_1} \exp \Gamma \dfrac{1}{2} \sin^2 \phi(x, y) \right]}$$

Une telle fonction de transfert autorise des opérations non linéaires sur des images.

Différents matériaux peuvent être utilisés comme milieu 1 d'amplification dans la cavité. Les matériaux photoréactifs constituent une solution intéressante pour l'amplification cohérente des images par transfert d'énergie à partir d'une onde de pompe. Les cristaux utilisés sont : Niobate de Potassium (K Nb $O_3$), le Titanate de Baryum (Ba Ti $O_3$), l'oxyde de Bismuth-Silicium ($Bi_{12}$ Si $O_{20}$), l'oxyde de Bismuth-Germanium ($Bi_{12}$ Ge $O_{20}$). Pour chacun de ces cristaux l'amplification cohérente d'une image a été obtenue avec des gains de l'ordre de 5 à 500. Les valeurs exceptionnellement élevées ($\simeq 500$) du gain sont obtenues avec les cristaux de Titanate de Baryum (Ba Ti O$_3$) pour une orientation électro-optique particulière de ce matériau. L'incidence de l'onde incidente sur le cristal correspond alors au coefficient électro-optique le plus élevé ; cette incidence est de l'ordre de 45° par exemple.

Pour les autres cristaux cités cette incidence est de 90°. Les énergies d'inscription requises dans le domaine visible sont typiquement de l'ordre de 100 µJcm$^{-2}$ pour l'oxyde de Bismuth-Silicium à 100 mJcm$^{-2}$ pour le Titanate de Baryum, donc compatibles avec les niveaux de puissance disponibles à partir d'un laser Argon.

Dans le dispositif de l'invention, l'onde qui se propage dans la cavité doit donc répondre à des conditions de phase en entrée de cavité ; le réseau inscrit dans le milieu amplificateur se stabilise donc, à chaque passage le réseau inscrit se superpose donc au réseau inscrit précédemment.

Mais le système d'interférence inscrit dans ce milieu peut en fonction de la dynamique du matériau considéré comporter n réseaux différents, mais alors la variation d'indice maximum est divisée par n, il y a moins de gain pour chaque réseau. Pour le Titanate de Baryum qui permet un très fort gain, n peut être égal à 10. Ainsi par exemple on peut considérer l'éclairement instantané du cristal par trois ondes signal à trois longueurs d'onde différentes $\lambda_1$, $\lambda_2$, $\lambda_3$, ce qui entraîne donc, si l'on considère trois ondes référence de mêmes longueurs d'onde : $\lambda_1$, $\lambda_2$, $\lambda_3$, l'inscription de trois réseaux en même temps. Le dispositif de l'invention permet donc la mise en mémoire d'une image cohérente trichrome.

Les miroirs utilisés sur les figures 5 et 6 sont des miroirs plans qui ont leurs surfaces réfléchissantes parallèles entre elles mais cela n'est pas nécessaire, ils peuvent avoir des surfaces réfléchissantes formant un certain angle entre elles, ou ils peuvent être des miroirs sphériques. Il faut que l'incidence de l'onde objet entrant dans la cavité soit telle, qu'après traversée de la lentille L$_1$, elle atteigne le milieu amplificateur 1. Dè plus il faut que ces moyens de guidage optique : lentilles, miroirs permettent au trajet optique de se refermer sur lui-même pour former ainsi une boucle fermée.

Ainsi le dispositif de l'invention permet la mise en mémoire et le traitement d'une image optique cohérente.

## Revendications

1. Dispositif de mise en mémoire d'une image cohérente dans une cavité optique multimode, comprenant au moins une source cohérente qui génère au moins une première onde signal (S) et au moins une deuxième onde référence (R), des moyens de guidage optique permettant de former une boucle fermée dans laquelle circule chaque onde signal (S), un milieu interactif (1) amplificateur étant disposé sur le parcours de chaque onde signal (S) et sur celui de chaque onde référence (R), chaque onde signal (S) interférant avec une onde référence dans ce milieu (1) pour créer un réseau de diffraction, chaque onde signal (S) recevant de l'énergie de cette onde référence (R) ; caractérisé en ce que ces moyens de guidage forment une cavité optique multimode, ce milieu interactif (1) amplificateur étant disposé dans le plan de Fourier (P') de cette cavité, une lame semi-transparente (M$_3$) étant disposée sur le parcours de chaque onde signal (S) pour extraire une partie de l'énergie de la cavité optique multimode.

2. Dispositif selon la revendication 1, caractérisé en ce que les moyens de guidage comprennent deux miroirs plans (M$_1$, M$_2$) dont les surfaces réfléchissantes sont disposées face à face, l'un de ces miroir (M$_1$) étant un miroir semi-transparent, chaque onde signal entrant dans la cavité *via* ce miroir semi-transparent (M$_1$), deux lentilles une première (L$_1$) et une seconde (L$_2$), au moins, étant disposées entre ces deux miroirs de façon à avoir un plan focal commun (P') qui est le plan de Fourier de la cavité, l'incidence de chaque onde signal en entrée étant telle qu'après passage à travers la première lentille (L$_1$) elle atteigne le milieu interactif amplificateur (1), le trajet optique de l'onde signal dans la cavité se refermant sur lui-même.

3. Dispositif selon la revendication 1, caractérisé en ce que plusieurs ondes signal à différentes longueurs d'onde sont introduites et circulent dans la cavité optique et interférent dans ce milieu (1) avec des ondes référence de mêmes longueurs d'onde qui leur sont cohérentes.

4. Dispositif selon la revendication 3, caractérisé en ce que trois ondes signal à trois longueurs d'onde différentes ($\lambda_1$, $\lambda_2$, $\lambda_3$) sont introduites et circulent dans la cavité optique et interférent dans le milieu (1) avec des ondes référence de même longueur d'onde ($\lambda_1$, $\lambda_2$, $\lambda_3$) et qui leur sont cohérentes.

5. Dispositif selon la revendication 1, caractérisé en ce que le milieu interactif amplificateur (1) est réalisé en matériau photoréfractif.

6. Dispositif selon la revendication 5, caractérisé en ce que ce matériau photoréfractif est choisi parmi les matériaux suivants : Niobate de Potassium, Titanate de Baryum, Oxyde de Bismuth-Silicium, Oxyde de Bismuth-Germanium.

7. Dispositif selon la revendication 1, caractérisé en ce qu'un obturateur électro-optique (2) est disposé sur le trajet de chaque onde signal afin d'arrêter la circulation de l'onde signal dans la cavité.

8. Dispositif selon la revendication 1, caractérisé en ce qu'un filtre (3) d'amplitude et de phase est placé dans le plan focal (P') commun des deux premières lentilles (L$_1$, L$_2$) sur le trajet de chaque onde signal.

**Claims**

1. A device for storing a coherent image in a multimode optical cavity, comprising at least one coherent source that generates at least a first signal wave (S) and at least a second reference wave (R), optical guiding means allowing a closed loop to be formed in which circulates each signal wave (S), an amplifying interactive medium (1) being disposed on the path of each signal wave (S) and on that of each reference wave (R), each signal wave (S) interfering with a reference wave in this medium (1) in order to create a diffraction network, each signal wave (S) receiving the energy of the reference wave (R), characterized in that these guiding means form a multimode optical cavity, this amplifying interactive medium (1) being disposed in the Fourier plane (P') of this cavity, a semi-transparent blade (M₃) being disposed on the path of each signal wave (S) in order to extract a part of the energy from the multimode optical cavity.

2. A device according to claim 1, characterized in that the guiding means comprise two plane mirrors (M₁, M₂) the reflecting surfaces of which are disposed facing each other, one of these mirrors (M₁) being a semi-transparent mirror, each signal wave entering into the cavity through this semi-transparent mirror (M₁), two lenses, a first (L₁) and a second (L₂), at least, being disposed between these two mirrors in such a way that there is a common focal plane (P') that is the Fourier plane of the cavity, the incidence of each signal wave at the input being such that after passage through the first lens (L₁) it reaches the amplifying interactive medium (1), the optical path of the signal wave in the cavity closing upon itself.

3. A device according to claim 1, characterized in that several signal waves of different wave lengths are introduced and circulate in the optical cavity and interfere in this medium (1) with the reference waves of the same wave length that are coherent thereto.

4. A device according to claim 3, characterized in that the three signal waves having three different wave lengths (λ₁, λ₂, λ₃) are introduced and circulate in the optical cavity and interfere in the medium (1) with reference waves of the same wave length (λ₁, λ₂, λ₃) that are coherent thereto.

5. A device according to claim 1, characterized in that the amplifying interactive medium (1) is made of a photorefractive material.

6. A device according to claim 5, characterized in that the photorefractive material is chosen from among the following materials : potassium niobate, barium titanate, bismuth-silicium oxide, bismuth-germanium oxide.

7. A device according to claim 1, characterized in that an electro-optical cap (2) is disposed on the path of each signal wave in order to stop the circulation of the signal wave in the cavity.

8. A device according to claim 1, characterized in that an amplitude and phase filter (3) is placed in the focal plane (P') common to the first two lenses (L₁, L₂) on the path of each signal wave.

**Patentansprüche**

1. Vorrichtung zum Speichern eines kohärenten Bildes in einem optischen Multimodal-Hohlraum, mit mindestens einer kohärenten Quelle, die mindestens eine erste Signalwelle (S) und mindestens eine zweite Bezugswelle (R) erzeugt, und mit Mitteln zur optischen Führung, durch die eine geschlossene Schleife geformt wird, in der jede Signalwelle (S) zirkuliert, wobei ein interaktives Verstärkermedium (1) im Signalweg jeder Signalwelle (S) und im Signalweg jeder Bezugswelle (R) angeordnet ist und wobei jede Signalwelle (S) mit einer Bezugswelle in diesem Medium (1) interferiert, um ein Diffraktionsnetz zu bilden, und jede Signalwelle (S) Energie von dieser Bezugswelle (R) empfängt, dadurch gekennzeichnet, daß diese Führungsmittel eine optische Multimodalkavität bilden und daß das interaktive Verstärkungsmedium (1) in der Fourier-Ebene (P') dieser Kavität liegt, wobei ein semitransparentes Blättchen (M₃) im Signalweg jeder Signalwelle (S) liegt, um einen Teil der Energie aus der optischen Multimodal-Kavität zu entnehmen.

2. Vorrichtung nach Anspruch 1, dadurch gekennzeichnet, daß die Führungsmittel zwei ebene Spiegel (M₁, M₂) aufweisen, deren reflektierente Oberflächen einander gegenüberliegen, wobei einer dieser Spiegel (M₁) ein semitransparenter Spiegel ist und jede Signalwelle in die Kavität über diesen semitransparenten Spiegel (M₁) einfällt, und daß mindestens zwei Linsen, nämlich eine erste Linse (L₁) und eine zweite Linse (L₂), zwischen diesen beiden Spiegeln liegen, derart, daß sie eine gemeinsame Brennebene (P') besitzen, die die Fourier-Ebene der Kavität ist, wobei jede Signalwelle eingangsseitig so auftrifft, daß sie nach Durchlauf der ersten Linse (L₁) das interaktive Verstärkungsmedium (1) erreicht und der optische Weg der Signalwelle in der Kavität sich in sich selbst schließt.

3. Vorrichtung nach Anspruch 1, dadurch gekennzeichnet, daß mehrere Signalwellen mit verschiedenen Wellenlängen eingeführt werden und in der optischen Kavität zirkulieren und im Medium (1) mit Bezugswellen interferieren, die die gleichen Wellenlängen besitzen und zu ihnen kohärent sind.

4. Vorrichtung nach Anspruch 3, dadurch gekennzeichnet, daß drei Signalwellen mit drei verschiedenen Wellenlängen (λ₁, λ₂, λ₃) eingeführt werden und in der optischen Kavität zirkulieren und in dem Medium (1) mit Bezugswellen interferieren, die dieselbe Wellenlänge (λ₁, λ₂, λ₃) besitzen und zu ihnen kohärent sind.

5. Vorrichtung nach Anspruch 1, dadurch gekennzeichnet, daß das interaktive Verstärkungsmedium (1) aus einem photorefraktiven Material besteht.

6. Vorrichtung nach Anspruch 5, dadurch gekennzeichnet, daß das photorefraktive Material aus der Gruppe von Materialien ausgewählt wird, die Kaliumniobat, Bariumtitanat, Bismut-Siliciumoxid und Bismut-Germaniumoxid enthält.

7. Vorrichtung nach Anspruch 1, dadurch gekennzeichnet, daß ein elektrooptisches Verschlußorgan (2) im Signalweg jeder Signalwelle liegt, um die Zirkulation der Signalwelle in der Kavität anzuhalten.

8. Vorrichtung nach Anspruch 1, dadurch gekennzeichnet, daß ein Amplituden- und Phasenfilter (3) in der gemeinsamen Brennebene (P') der beiden ersten Linsen ($L_1$, $L_2$) im Signalweg jeder Signalwelle liegt.

FIG.1

FIG.2

FIG.3

FIG. 4

FIG.5

FIG.6

3

# FIG. 7